# EUROPÄISCHE PATENTSCHRIFT

(11) **EP 1 240 632 B1**
(45) Veröffentlichungstag und Bekanntmachung des Hinweises auf die Patenterteilung: **04.06.2003**
(21) Anmeldenummer: 99959167.0
(22) Anmeldetag: 23.12.1999
(51) Int. Cl.: G07F 19/00

(54) **ZAHLUNGSTRANSAKTIONSVERFAHREN UND ZAHLUNGSTRANSAKTIONSSYSTEM**
PAYMENT TRANSACTION METHOD AND PAYMENT TRANSACTION SYSTEM
PROCEDE ET SYSTEME DE TRANSACTION DE PAIEMENT

(43) Veröffentlichungstag der Anmeldung: 18.09.2002
(73) Patentinhaber: Swisscom Mobile AG, 3050 Bern (CH)
(72) Erfinder: RITTER, Rudolf, CH-3052 Zollikofen (CH); SCHLEGEL, Georges, CH-4515 Oberdorf (CH); LAUPER, Eric, CH-3014 Bern (CH)
(74) Vertreter: BOVARD AG - Patentanwälte
(86) Internationale Anmeldenummer: CH9900623
(87) Internationale Veröffentlichungsnummer: WO01069555

(56) Entgegenhaltungen:
- WO-A-96/25828
- WO-A-98/11519
- WO-A-98/34203
- WO-A-98/37524
- US-A- 5 986 565

## Beschreibung

Die vorliegende Erfindung betrifft ein Zahlungstransaktionsverfahren und ein Zahlungsfransaktionssystem. Insbesondere betrifft die vorliegende Erfindung ein Zahlungstransaktionsverfahren gemäss dem Oberbegriff des unabhängigen Verfahrensanspruchs 1 und ein Zahlungstransaktionssystem zur Ausführung dieses Zahlungstransaktionsverfahrens.

Durch die zunehmende Beliebtheit und Verbreitung der mobilen Telefonie sind immer mehr Kunden von Dienststellen, sogenannte Points of Sale (POS), beispielsweise Verkaufsstellen von Produkten und/oder Dienstleistungen, mit tragbaren Mobilgeräten ausgerüstet, nämlich Mobilfunktelefone, die die Identifizierung und Authentifizierung eines betreffenden Kunden unterstützen. Da für die Bezahlung von Produkten und/oder Dienstleistungen bei der Dienststelle immer häufiger bargeldlose Zahlungsformen verwendet werden und die Kunden für diesen Zweck von den verschiedenen Dienststellen mit zahlreichen verschiedenen Identifizierungskarten ausgerüstet werden, bestand der Wunsch, für diesen Zweck die oben genannten tragbaren Mobilgeräte einzusetzen. Gebräuchliche Mobilfunktelefone umfassen ein Identifizierungsmodul, eine sogenannte SIM-Chipkarte (Subscriber Identification Module), welches eine eindeutige Benutzeridentifizierung enthält, beispielsweise eine IMSI (International Mobile Subscriber Identity), mittels welcher der betreffende Benutzer in einem Telekommunikationsnetz identifiziert werden kann. Um die Benutzung eines solchen Mobilgeräts durch einen unbefugten Benutzer zu verhindern, muss sich ein Benutzer vorerst beim Mobilgerät authentifizieren, beispielsweise indem er mittels Bedienungselementen des Mobilgeräts einen persönlichen Code (Personal Identification Number, PIN) eingibt, der unter Zuhilfenahme von Sicherheitsdiensten mit einem auf der SIM-Chipkarte gespeicherten Wert verglichen wird.

In der Patentanmeldung EP 708 547 A2 wird die Verwendung eines Mobilfunktelefons als authentifizierter Transaktionskontroller beschrieben. Gemäss der in EP 708 547 A2 offenbarten Lehre authentifiziert sich ein Kunde in einem Verkaufsgeschäft zunächst bei seinem Mobilfunktelefon, beispielsweise durch Eingabe eines persönlichen Identifizierungscodes, danach vereinbaren der Geschäftsbetreiber und der Kunde ein Transaktionspasswort, welches vom Kunden in sein Mobilfunktelefon eingegeben und zusammen mit Identifizierungsdaten, beispielsweise die Gerätenummer und die Telefonnummer des Mobilfunktelefons, drahtlos an einen Empfänger eines Bezahlungsterminals des Verkaufsgeschäfts übermittelt wird. Gemäss der in EP 708 547 A2 offenbarten Lehre werden dann vom Verkaufsgeschäft der betreffende zu bezahlende Geldbetrag, der entweder vom Bezahlungsterminal bezogen wird oder vom Kunden in sein Mobilfunktelefon eingegeben und zusammen mit dem Transaktionspasswort und den Identifizierungsdaten an den Empfänger des Bezahlungsterminals übertragen wird, und die Identifizierungsdaten zur Kreditüberprüfung an ein Kreditzentrum weitergeleitet. Das in EP 708 547 A2 beschriebene Transaktionspasswort ermöglicht insbesondere, dass das Bezahlungsterminal die vom Mobilfunktelefon übermittelten Daten der betreffenden Transaktion zuordnen kann und dadurch nicht durch eventuelle Übermittlungen von anderen Mobilfunktelefonen beeinträchtigt wird.

Dokument WO9837524 offenbart ebenfalls ein Transaktionsverfahren mit einem Mobilgerät. Die Implementierung der Kontaktstelle zwischen Händlerterminal und Kunden-Mobiltelefon sowie die Anbindung des Händlerterminals zum Finanzserver mittels eines Telekommunikationsnetzes entspricht der der vorliegenden Erfindung. Jedoch wird ein anderes Zahlungsprotokoll verwandt.

Es ist eine Aufgabe dieser Erfindung, ein neues Zahlungstransaktionsverfahren und ein neues Zahlungstransaktionssystem vorzuschlagen, welche insbesondere für Dienststellen mit einem oder mehreren Bezahlungsterminals und mit einem oder mehreren mit Mobilgeräten ausgerüsteten Kunden eingesetzt werden können.

Gemäss der vorliegenden Erfindung wird dieses Ziel insbesondere durch die Merkmale der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass in den Zahlungstransaktionen zwischen einem Kunden mit einem tragbaren Mobilgerät, beispielsweise ein Mobilfunktelefon oder ein kommunikationsfähiger Palm- oder Laptop-Computer, und einer Dienststelle mit mehreren Bezahlungsterminals, in welchen Zahlungstransaktionen ein Bezahlungsterminal der Dienststelle den Kunden über einen zu bezahlenden Transaktionstotalbetrag und über eine dem Bezahlungsterminal zugeordnete Bezahlungsterminalidentifizierung informiert und der Kunde die Bezahlungsterminalidentifizierung dem Mobilgerät angibt, das Mobilgerät einen Transaktionsinitiierungsbeleg, der eine Verknüpfung der angegebenen Bezahlungsterminalidentifizierung mit einer Kundenidentifizierung des Kunden umfasst, vorbereitet und über eine kontaktlose Geräteschnittstelle, beispielsweise eine Infrarotschnittstelle oder eine Funkschnittstelle, direkt an das Bezahlungsterminal und über ein Mobilfunknetz, beispielsweise ein GSM- oder ein UMTS-Netz oder ein anderes, beispielsweise satellitenbasiertes, Mobilfunknetz, an eine Transaktionszentrale übermittelt, dass das Bezahlungsterminal nach dem Empfang des Transaktionsinitiierungsbelegs einen Transaktionsaufgabebeleg, der mindestens die Kundenidentifizierung, die Bezahlungsterminalidentifizierung und den Transaktionstotalbetrag umfasst, vorbereitet und über ein Kommunikationsnetz, beispielsweise ein oben genanntes Mobilfunknetz oder ein Festnetz, an die Transaktionszentrale übermittelt, und dass die Transaktionszentrale eine Bezahlungsaufforderung, die mindestens den Transaktionstotalbetrag und beispielsweise die Bezahlungsterminalidentifizierung umfasst, über das Mobilfunknetz an das Mobilgerät übermittelt, von welchem Mobilgerät der Transaktionsinitiierungsbeleg an die Transaktionszentrale übermittelt wurde.

Im erfindungsgemässen Zahlungstransaktionsverfahren und Zahlungstransaktionssystem wird also eine Zahlungstransaktion zwischen einem Kunden mit einem tragbaren Mobilgerät und einer Dienststelle, beispielsweise ein sogenannter Point of Sale (POS), mit mehreren Bezahlungsterminals in zwei Phasen durchgeführt. In der ersten Phase, in der vom Kunden die Bezahlungsterminalidentifizierung seinem Mobilgerät angegeben, im Mobilgerät der Transaktionsinitiierungsbeleg vorbereitet und an das Bezahlungsterminal sowie an die Transaktionszentrale übermittelt wird, werden das an der betreffenden Zahlungstransaktion beteiligte Bezahlungsterminal und das an der betreffenden Zahlungstransaktion beteiligte Mobilgerät in der Transaktionszentrale einander zugeordnet, wobei beispielsweise auch die Authentizität der beiden Zahlungstransaktionspartner überprüft werden kann. In der zweiten Phase kann dann zwischen den Zahlungstransaktionspartnern der finanzielle Aspekt der Zahlungstransaktion durchgeführt werden, wobei in dieser Phase keine direkte Kommunikation zwischen dem Bezahlungsterminal und dem Mobilgerät stattfindet, da der finanzielle Aspekt der Zahlungstransaktion über die Transaktionszentrale abgewickelt wird. Die zweite Phase wird von der Transaktionszentrale eingeleitet indem die Bezahlungsaufforderung der Zahlungstransaktion an das an der betreffenden Zahlungstransaktion beteiligte Mobilgerät übermittelt wird.

Vorzugsweise wird im Mobilgerät, beispielsweise nachdem die Bezahlungsaufforderung vom betreffenden Kunden mittels Bedienungselementen des Mobilgeräts akzeptiert wurde, ein Bezahlungsbeleg, der eine Verknüpfung der Bezahlungsaufforderung mit einer Kundenidentifizierung des Kunden umfasst, vorbereitet und vom Mobilgerät über das Mobilfunknetz an die Transaktionszentrale übermittelt. Der Bezahlungsbeleg wird, beispielsweise mit einer elektronischen Signatur des Kunden versehen oder als gesichertes Zertifikat ausgeführt. Die Transaktionszentrale, beispielsweise ein Kommunikations-Server, kann den Bezahlungsbeleg weiterverarbeiten und/oder weiterleiten, z.B. an ein Finanzinstitut oder an eine Clearingstelle. Vorteilhafterweise übermittelt die Transaktionszentrale nach dem Erhalt des Bezahlungsbelegs eine Transaktionsbestätigung, die mindestens Angaben zur Identifizierung der betreffenden Zahlungstransaktion umfasst, über das Kommunikationsnetz an das Bezahlungsterminal und je nach Ausführung über das Mobilfunknetz auch an das Mobilgerät.

In einer Ausführungsvariante werden im Mobilgerät vor der Übermittlung des Bezahlungsbelegs an die Transaktionszentrale Angaben über die Bezahlungsart, beispielsweise Belastung auf eine bestimmte Kreditkartennummer, Belastung auf ein bestimmtes Kundenkonto, Belastung auf ein bestimmtes Bankkonto, oder Belastung auf einen im Mobilgerät gespeicherten vorausbezahlten Geldbetrag, beispielsweise auf der SIM-Karte des Mobilgeräts, in den Bezahlungsbeleg eingefügt. Das Einfügen von Angaben über die beabsichtigte Bezahlungsart hat den Vorteil, dass dadurch die Flexibilität des erfindungsgemässen Zahlungstransaktionsverfahrens und Zahlungstransaktionssystems erhöht wird, und dass je nach Art der gewünschten Bezahlungsart mindestens gewisse Zahlungstransaktionen direkt (on-line) und automatisch verbucht werden können, während andere nachträglich (off-line), beispielsweise unter Zuhilfenahme einer dafür geeigneten Clearingstelle, verbucht werden können.

Vorzugsweise fügt das Bezahlungsterminal bei der Vorbereitung des Transaktionsaufgabebelegs zusätzlich eine Dienststellenidentifizierung in den Transaktionsaufgabebeleg ein, und der Transaktionstotalbetrag wird der durch die Dienststellenidentifizierung bestimmten Dienststelle gutgeschrieben. Eine Dienststellenidentifizierung als Bestandteil des Transaktionsaufgabebelegs hat überdies den Vorteil, dass Zahlungstransaktionen von einer Vielzahl von Dienststellen über die Transaktionszentrale abgewickelt werden können, wobei die Dienststellen beispielsweise verschiedenen Inhabern, respektive verschiedenen Dienststellenbetreibern, zugeordnet sein können.

In einer Ausführungsvariante authentifiziert sich der Kunde bei seinem Mobilgerät beispielsweise mit einem biometrischen Merkmal, zum Beispiel mit einem Fingerabdruck, einem Stimmmuster oder einem Augenmuster. Die Verwendung von biometrischen Merkmalen zur Authentifizierung eines Benutzers hat den Vorteil, dass die damit verbundene Sicherheit höher ist als bei der Verwendung eines persönlichen Codes, der beispielsweise durch unrechtmässige Benutzer erraten oder vom rechtmässigen Benutzer vergessen werden kann.

In einer Ausführungsvariante übermittelt das Bezahlungsterminal die Bezahlungsterminalidentifizierung über die kontaktlose Geräteschnittstelle direkt an das Mobilgerät, und der Kunde gibt die Bezahlungsterminalidentifizierung dem Mobilgerät an, indem er die vom Bezahlungsterminal direkt über die kontaktlose Geräteschnittstelle empfangene Bezahlungsterminalidentifizierung mittels Bedienungselementen des Mobilgeräts akzeptiert. Der Vorteil dieser Ausführungsvariante besteht darin, dass der Kunde die Bezahlungsterminalidentifizierung nicht manuell in das Mobilgerät eintippen muss, so dass Eingabefehler durch den Kunden verhindert werden können.

In einer Ausführungsvariante wird die Solvenz des durch die übermittelte Kundenidentifizierung bestimmten Kunden durch die Transaktionszentrale überprüft. Basierend auf dem Resultat dieser Solvenzprüfung kann die Transaktionszentrale gegebenenfalls eine Meldung an das betreffende Bezahlungsterminal sowie an das betreffende Mobilgerät übermitteln, mittels welcher Meldung dem betreffenden Kunden die Bezahlung der Zahlungstransaktion über das erfindungsgemässe Verfahren wegen mangelnder Solvenz verwehrt wird.

In einer Ausführungsvariante wird der Bezahlungsbeleg und/oder eine Transaktionsbestätigung von der Transaktionszentrale betreffend der erfolgreich abgwickelten Zahlungstransaktion im Mobilgerät gespeichert, beispielsweise auf der SIM-Karte des Mobilgeräts. Der Vorteil der Speicherung von Bezahlungsbelegen und/oder Transaktionsbestätigungen im Mobilgerät besteht darin, dass dem Kunden dadurch ermöglicht wird, über getätigte Zahlungstransaktionen Buch zu führen und einen im Mobilgerät gespeicherten Bezahlungsbeleg, respektive eine Transaktionsbestätigung, als Quittung zu verwenden, insbesondere dann, wenn die im Bezahlungsbeleg enthaltene Bezahlungsaufforderung und/oder die Transaktionsbestätigung ein Zertifikat oder eine elektronische Signatur der betreffenden Dienststelle und/oder der Transaktionszentrale enthält.

Nachfolgend wird eine Ausführung der vorliegenden Erfindung anhand eines Beispieles beschrieben. Das Beispiel der Ausführung wird durch folgende beigelegten Figuren illustriert:
Figur 1 zeigt ein Blockdiagramm, welches schematisch eine Dienststelle darstellt, in der sich mehrere Mobilgeräte und mehrere Bezahlungsterminals befinden, wobei die Mobilgeräte über ein Mobilfunknetz und die Bezahlungsterminals über ein Kommunikationsnetz mit einer Transaktionszentrale verbunden sind.
Figur 2 zeigt ein Zeitdiagramm, welches einen möglichen sequentiellen Ablauf des Informationsflusses zwischen einem Bezahlungsterminal, einer Transaktionszentrale und einem Mobilgerät illustriert.

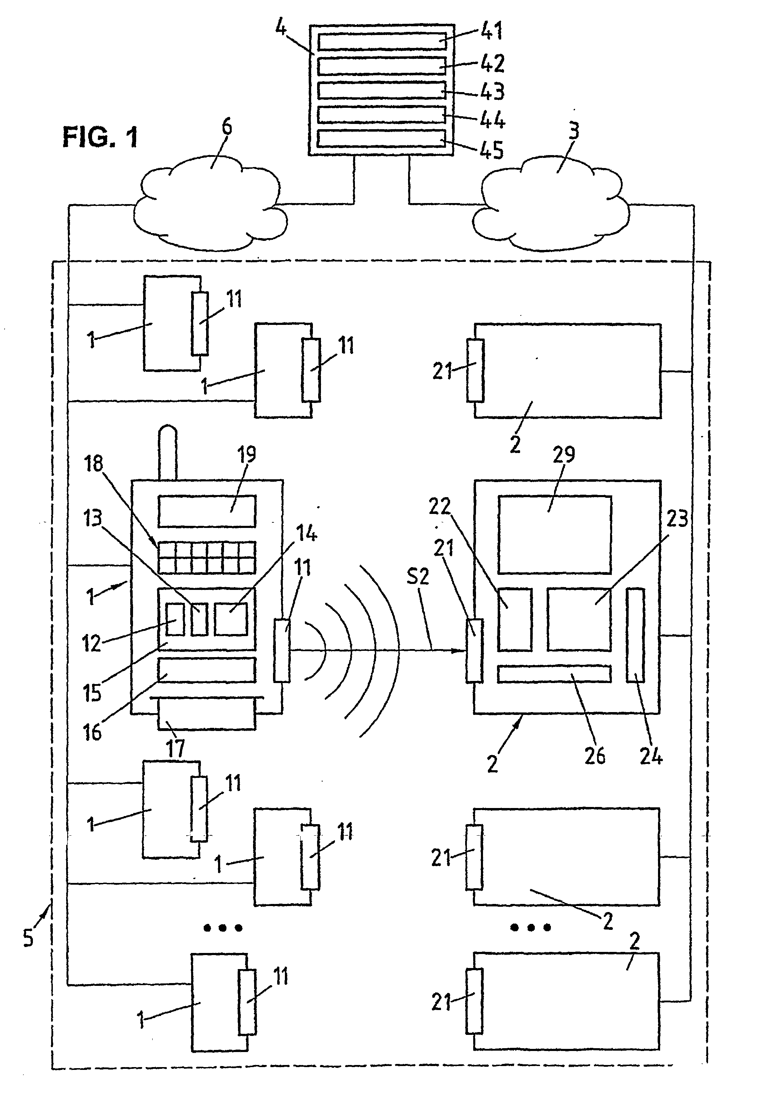

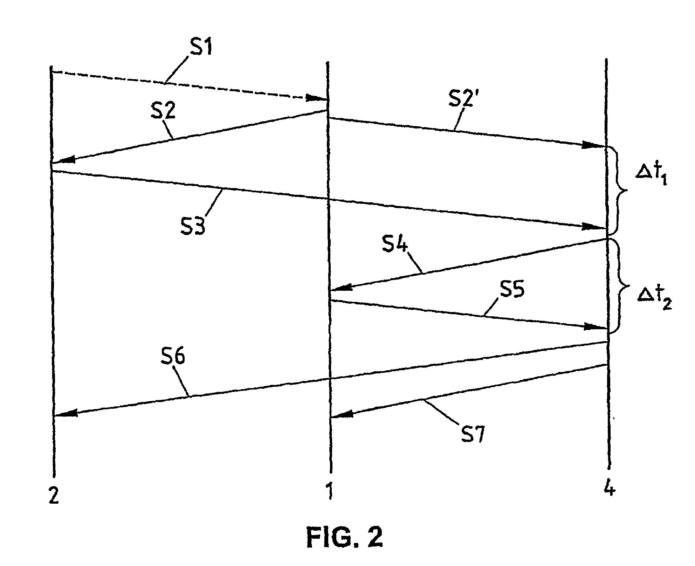

In den Figuren 1 und 2 sind Elemente, die mit einer gleichen Bezugsziffer bezeichnet sind, als gleichwertige Elemente zu betrachten. In der Figur 1 bezieht sich die Bezugsziffer 5 auf eine Dienststelle, einen sogenannten Point of Sale (POS), zum Beispiel eine öffentlich zugängliche Verkaufsstelle von Produkten und/oder Dienstleistungen. Wie in der Figur 1 illustriert wird, befinden sich in der Dienststelle 5 mehrere Bezahlungsterminals 2 und mehrere von Kunden getragene Mobilgeräte 1.

Die tragbaren Mobilgeräte 1 sind beispielsweise Mobilfunktelefone, Laptop- oder Palmtop-Computer oder andere geeignete tragbare Mobilgeräte, die über ein Mobilfunknetz 6, beispielsweise ein GSM- oder ein UMTS-Netz oder ein anderes, beispielsweise satellitenbasiertes, Mobilfunknetz, kommunizieren, das heisst insbesondere auch Daten austauschen, können. Der Datenaustausch über das Mobilfunknetz 6 kann beispielsweise mittels speziellen Meldungen, beispielsweise SMS- (Short Message Service) oder USSD-Meldungen (Unstructured Supplementary Services Data), oder mittels speziellen Datendiensten, beispielsweise GPRS (Generalized Packet Radio Service) oder HSCSD (High Speed Circuit Switched Data), erfolgen.

Der in der vorliegenden Beschreibung verwendete Begriff "Softwa-remodul" bezieht sich jeweils auf einen Programmcode, der in einem Speicher gespeichert und auf einem Prozessor ausgeführt wird, beispielsweise in Kooperation mit geeigneten Operationssystemen und/oder unter Zuhilfenahme von Diensten von virtuellen Plattformen, z.B. eine Java Virtual Machine (Java ist ein eingetragenes Warenzeichen von Sun Microsystems), so dass der Prozessor so gesteuert wird, dass er die jeweiligen dem Softwaremodul zugeordneten Funktionen ausführt. Der Fachmann wird verstehen, dass die für die Ausführung der Softwaremodule verwendete Programmiersprache den Sinn der vorliegenden Erfindung nicht verändert, dass aber die Verwendung von gewissen Programmiersprachen, beispielsweise Java oder eine andere objektorientierte und Plattform-unabhängige Programmiersprache, durchaus dem Fachmann bekannte Vorteile aufweisen können. Den Softwaremodulen können Funktionen zugeordnet sein, für deren Ausführung ein betreffendes Softwaremodul Funktionen und/oder Dienste zu Hilfe nimmt, die in einer Ausführung, beispielsweise aus Effizienzgründen, in anderen Modulen lokalisiert sind, die aber gleichwohl auch als funktionale Bestandteile des betreffenden Softwaremoduls zu verstehen sind.

Die Bezahlungsterminals 2 basieren beispielsweise auf herkömmlichen elektronischen Kassensystemen, die zum Beispiel mit nicht dargestellten Bedienungselementen und Preiserfassungskomponenten, z.B. Laserscanners, ausgerüstet sind und mindestens einen Prozessor 26 umfassen.

Für den direkten Datenaustausch zwischen einem Mobilgerät 1 und einem Bezahlungsterminal 2, die als Transaktionspartner an einer Zahlungstransaktion beteiligt sind, verfügen die Mobilgeräte 1 und die Bezahlungsterminals 2 über eine kontaktlose Geräteschnittstelle 11-21. Dabei sind die Mobilgeräte 1 in einer Minimalvariante mit mindestens einem Sender 11 der kontaktlosen Schnittstelle 11-21 ausgestattet. Der Sender 11 umfasst die nötigen Hardwareelemente zum Aussenden von Daten, beispielsweise in Form von Funk- oder Infrarotwelfen, und für die Verbindung des Senders mit dem Prozessor 16 des Mobilgeräts 1, sowie die programmierten Softwaremodule und Softwareschnittstellen, die zum Betreiben und zum Steuern des Senders 11 benötigt werden (der Sender 11 kann beispielsweise auch der Mobilfunksender des Mobilgeräts 1 sein, der mit reduzierter Leistung betrieben wird). Für diese-Minimalvariante sind die Bezahlungsterminals 2 mit einem entsprechenden Empfänger 21 ausgerüstet, der über die nötigen Hardwareelemente und Softwaremodule verfügt, um Daten über die kontaktlose Schnittstelle 11-21 zu empfangen und an den Prozessor 26 des Bezahlungsterminals 2 weiterzuleiten.

Die Mobilgeräte 1 und die Bezahlungsterminals 2 können auch jeweils mit Sendern und Empfängern für eine bidirektionale kontaktlose Schnittstelle 11-21 ausgerüstet sein. Der Fachmann wird verstehen, dass auch diese bidirektionalen kontaktlosen Schnittstelle 11-21, beispielsweise aus Kompatibilitätsgründen, im unidirektionalen Betrieb eingesetzt werden kann. Solche bidirektionale kontaktlose Geräteschnittstellen sind zum Beispiel Infrarotschnittstellen, zum Beispiel High Speed Infrared (HSIR)-Schnittstellen oder IrDA-Schnittstellen (Infrared Data Association), induktive Schnittstellen, zum Beispiel Radio Frequency Identification (RFID)-Schnittstellen, Home RF (Radio Frequency)-Schnittstellen, Digital European Cordless Telecommunications (DECT)-Schnittstellen oder andere Cordless Telecommunications System (CTS)-Schnittstellen, oder hochfrequente Funkschnittstellen, insbesondere sogenannte Bluetooth-Schnittstellen, die z.B. bei 2.4GHz arbeiten und zum Anmeldezeitpunkt der vorliegenden Erfindung beispielsweise im Internet auf der Seite "www.bluetooth.com" beschrieben wurden.

Den Bezahlungsterminals 2 ist jeweils eine Bezahlungsterminalidentifizierung zugeordnet, die es ermöglicht, ein betreffendes Bezahlungsterminal 2 aus mehreren in der Dienststelle 5 vorhandenen Bezahlungsterminals 2 zu identifizieren. Die Bezahlungsterminalidentifizierung ist zum Beispiel eine Zahl, zum Beispiel "12", eine Buchstabenfolge, zum Beispiel "BE", oder eine gemischte Folge von Buchstaben und Zahlen, zum Beispiel "K3", die in der Regel auf ein, zwei oder drei Ziffern, respektive Buchstaben beschränkt werden können, um eine eindeutige Identifizierung eines Bezahlungsterminals 2 in einer Dienststelle 5 zu gewährleisten.

Die Bezahlungsterminals 2 umfassen jeweils Mittel, um einen Kunden über die Bezahlungsterminalidentifizierung zu informieren, beispielsweise ein Schild oder eine Tafel, auf denen die Bezahlungsterminalidentifizierung für die Kunden sichtbar dargestellt ist. In einer Ausführungsvariante, auf die später näher eingegangen wird, kann die Bezahlungsterminalidentifizierung jeweils durch ein Bezahlungsterminalidentifizierungsmodul 22 der Bezahlungsterminals 2, beispielsweise ein Softwaremodul, Ober die kontaktlose Schnittstelle 11-21 an ein betreffendes Mobilgerät 1 übertragen werden. Die Bezahlungsterminals 2 umfassen jeweils Mittel, um einen an einer Zahlungstransaktion beteiligten Kunden über einen zu bezahlenden Transaktionstotalbetrag der Zahlungstransaktion zu informieren, beispielsweise eine Anzeige 29 sowie geeignete Softwaremodule zur Ansteuerung dieser Anzeige 29. Auf dieser Anzeige 29 kann auch die Bezahlungsterminalidentifizierung angezeigt werden.

Falls der Kunde den Totalbetrag der Zahlungstransaktion mittels seinem Mobilgerät 1 bezahlen möchte, schaltet er sein Mobilgerät 1 ein und wird in einer Ausführungsvariante sicherheitshalber von einem Authentifizierungsmodul 12 des Mobilgeräts 1, beispielsweise ein programmiertes Softwaremodul, aufgefordert, sich zu authentifizieren. Der Kunde wird beispielsweise aufgefordert, einen persönlichen Identifizierungscode einzugeben (Personal Identification Number, PIN), der vom Authentifizierungsmodul 12 entgegengenommen und mit einem im Mobilgerät 1, beispielsweise auf einer SIM-Karte 17 (Subscriber Identification Module) des Mobilgeräts 1, gesichert gespeicherten Code verglichen wird. In einer Variante verfügt das Authentifizierungsmodul 12 zudem über Hardwarekomponenten und weitere Softwarekomponenten, um vom Kunden ein biometrisches Merkmal zur Authentifizierung entgegenzunehmen und mit einem vorgängig im Mobilgerät 1, beispielsweise auf einer SIM-Karte 17 des Mobilgeräts 1, gesichert gespeicherten biometrischen Merkmal zu vergleichen. Das biometrische Merkmal ist beispielsweise ein Stimmmuster, das mittels einem Mikrofon des Mobilgeräts 1 aufgenommen wird, ein Fingerabdruck oder Gesichtszüge, die mit einem Videosensor des Mobilgeräts 1 erfasst werden, oder ein Augenmuster, z.B. ein Muster der Iris oder der Retina, das mit einem geeigneten Scanner aufgenommen wird.

Gegebenenfalls nach einer erfolgreichen Authentifizierung wählt der Kunde auf seinem Mobilgerät 1, beispielsweise mittels der Bedienungselemente 18, aus einem auf der Anzeige 19 des Mobilgeräts 1 dargestellten Funktionsmenü die Funktion "Zahlungstransaktion". Die Menü- und Funktionsablaufsteuerung wird beispielsweise durch ein programmiertes Softwaremodul des Mobilgeräts 1 ausgeführt, z.B. durch ein Java-Applet, das beispielsweise auf der SIM-Karte 17 des Mobilgeräts 1 gespeichert ist. Aus Sicherheitsgründen kann das (oder die) Softwaremodul(e) zur Ausführung der Funktion "Zahlungstransaktion" beispielsweise von einem zuständigen Betreiber über das Mobilfunknetz 6 oder über die kontaktlose Geräteschnittstelle 11-21 gesperrt werden, beispielsweise indem ein signiertes oder zertifiziertes Befehlswort mittels geeigneten Meldungen an das Mobilgerät 1 übermittelt wird, wo es durch ein entsprechendes Softwaremodul verarbeitet wird.

Nach der Wahl der Funktion für die Zahlungstransaktion wird der Benutzer vom Transaktionsinitiierungsmodul 13 des Mobilgeräts 1, beispielsweise ein programmiertes Softwaremodul, aufgefordert, die Bezahlungsterminalidentifizierung der betreffenden Zahlungstransaktion anzugeben. Der Kunde kann die Bezahlungsterminalidentifizierung beispielsweise mittels Bedienungselementen 18 des Mobilgeräts 1 eintippen. Falls das Mobilgerät 1 über ein geeignetes Spracherkennungsmodul verfügt, kann der Kunde die Bezahlungsterminalidentifizierung dem Mobilgerät 1 auch mittels gesprochener Sprache angeben. Um Eingabefehler zu vermeiden, kann in einer Variante das Mobilgerät 1, beispielsweise mittels des Transaktionsinitiierungsmoduls 13 des Mobilgeräts 1, die Bezahlungsterminalidentifizierung des betreffenden Bezahlungsterminals 2 über die kontaktlose Geräteschnittstelle 11-21 entgegennehmen, wie in der Figur 2 durch den gestrichelten Pfeil S1 angedeutet wird, und auf der Anzeige 19 des Mobilgeräts 1 darstellen, so dass der Kunde die Bezahlungsterminalidentifizierung des betreffenden Bezahlungsterminals 2 dem Mobilgerät 1 dadurch angeben kann, dass er die angezeigte Bezahlungsterminalidentifzierung mittels der Bedienungselemente 18 des Mobilgeräts 1 akzeptiert.

In dieser letzteren Variante kann das Bezahlungsterminalidentifizierungsmodul 22 des Bezahlungsterminals 2 die Bezahlungsterminalidentifizierung, beispielsweise während eines vordefinierten Zeitintervalls und/oder bis die Zahlungstransaktion, wie später näher erläutert wird, durch das an der betreffenden Zahlungstransaktion beteiligte Mobilgerät 1 über die kontaktlose Geräteschnittstelle 11-21 initiiert wird, mehrfach, beispielsweise periodisch, über die kontaktlose Geräteschnittstelle 11-21 aussenden, wobei die Sendeleistung des Senders 21 so gewählt wird, das die Bezahlungsterminalidentifizierung nur im engeren Bereich um das Bezahlungsterminal 2 empfangen werden kann und nicht unnötig von anderen Mobilgeräten 1 in der Dienststelle 5 empfangen wird.

Das Transaktionsinitiierungsmodul 13 des Mobilgeräts 1 bereitet einen Transaktionsinitiierungsbeleg vor, der eine Verknüpfung der angegebenen Bezahlungsterminalidentifizierung mit einer Kundenidentifizierung des Kunden umfasst, und initiiert die Zahlungstransaktion indem es diesen Transaktionsinitiierungsbeleg über die kontaktlose Geräteschnittstelle 11-21 an das betreffende Bezahlungsterminal 2 übermittelt, wie in den Figuren 1 und 2 durch den Pfeil S2 angedeutet wird. Im Bezahlungsterminal 2 können empfangene Transaktionsinitiierungsbelege anhand der darin enthaltenen Bezahlungsterminal identifizierung gefiltert werden. Wie in der Figur 2 durch den Pfeil S2' angedeutet wird, übermittelt das Transaktionsinitiierungsmodul 13 des Mobilgeräts 1 den Transaktionsinitiierungsbeleg zudem über das Mobilfunknetz 6 an die Transaktionszentrale 4.

Die Transaktionszentrale 4 basiert beispielsweise auf einem herkömmlichen Kommunikations-Server, das heisst auf einem Computer, der als Server mit geeigneten Operations- und Datenbanksystemen, Datenspeichern und einem Kommunikationsmodul 45 ausgelegt ist. Die Transaktionszentrale 4 kann auch mit mehreren untereinander verbundenen Computern realisiert werden. Das Kommunikationsmodul 45 umfasst beispielsweise ein Softwaremodul sowie die nötigen Hardwarekomponenten, um über das Mobilfunknetz 6 sowie über das Kommunikationsnetz 3 zu kommunizieren, das heisst insbesondere um über diese Netze Daten mit den Mobilgeräten 1 und den Bezahlungsterminals 2 auszutauschen. Das Kommunikationsnetz 3 ist zum Beispiel ein Festnetz, beispielsweise das öffentliche geschaltete Telefonnetz, ein ISDN-Netz, ein Internet-Netzwerk, oder ein LAN (Local Area Network) oder WAN (Wide Area Network), oder ein Mobilfunknetz, beispielsweise ein GSM- oder ein UMTS-Netz oder ein anderes, beispielsweise satellitenbasiertes, Mobilfunknetz. An dieser Stelle soll darauf aufmerksam gemacht werden, dass der Anschluss der Transaktionszentrale 4 an das Mobilfunknetz 6 in der Figur 1 nur schematisch dargestellt ist und dass dieser Anschluss in bekannter Weise, zum Beispiel über eine Festnetzverbindung und über eine Vermittlungsstelle, insbesondere ein Mobile Switching Centre (MSC), erfolgt. Die Mobilgeräte 1 können beispielsweise auch mittels WAP (Wireless Application Protocol), geeigneten Java Applets (Java ist ein eingetragenes Warenzeichen von Sun Microsystems) und/oder SIM-Toolkit-Funktionen über das Internet mit der Transaktionszentrale 4 kommunizieren.

Die Kundenidentifizierung ermöglicht es den Kunden als registrierten Teilnehmer des erfindungsgemässen Zahlungstransaktionsverfahrens zu identifizieren. Die Kundenidentifizierung kann beispielsweise so strukturiert sein, dass sie eine Zuweisungsautoritätsidentifizierung umfasst, die die Zuweisungsautorität bestimmt, die die Kundenidentifizierung dem betreffenden Kunden zugewiesen hat, beispielsweise den Betreiber einer Kette von Dienststellen 5, und dass sie eine für diese Zuweisungsautorität eindeutige Kundennummer umfasst. Die Kundenidentifizierung kann auch für eine internationale Verwendung vorgesehen sein und beispielsweise Länderidentifizierungen und/oder andere geeignete Datenelemente, beispielsweise ein Verfalldatum, umfassen. Die Kundenidentifizierung kann auch mit einer elektronischen Signatur versehen oder als gesichertes Zertifikat ausgeführt sein.

Das Bezahlungsterminal 2 umfasst ein Transaktionsaufgabemodul 23, beispielsweise ein programmiertes Softwaremodul, welches nach dem Empfang des Transaktionsinitiierungsbelegs einen Transaktionsaufgabebeleg vorbereitet, der mindestens die Kundenidentifizierung, die Bezahlungsterminalidentifizierung und den Transaktionstotalbetrag der betreffenden Zahlungstransaktion sowie eine Dienststellenidentifizierung umfasst, und diesen Transaktionsaufgabebeleg über das Kommunikationsnetz 3 an die Transaktionszentrale 4 übermittelt, wie in der Figur 2 durch den Pfeil S3 angedeutet wird. Diese Übermittlung erfolgt beispielsweise automatisch oder erst nach der Eingabe eines entsprechenden Befehls in das Bezahlungsterminal 2 durch Angestellte der Dienststelle 5.

In der Transaktionszentrale 4 wird der vom Mobilgerät 1 übermittelte Transaktionsinitiierungsbeleg, wie in der Figur 2 durch den Pfeil S2' angedeutet, mittels des Kommunikationsmoduls 45 entgegengenommen und zwischengespeichert. In der Transaktionszentrale 4 wird auch der vom Bezahlungsterminal 2 übermittelte Transaktionsaufgabebeleg, wie in der Figur 2 durch den Pfeil S3 angedeutet, mittels des Kommunikationsmoduls 45 entgegengenommen und zwischengespeichert. Dabei ermittelt das Kommunikationsmodul 45 zudem in bekannter Weise die Rufnummer, beispielsweise die MSISDN-Nummer (Mobile Subscriber ISDN), des Mobilgeräts 1, das den Transaktionsinitiierungsbeleg übermittelt hat, und speichert diese Rufnummer in der Transaktionszentrale 4 dem vom Mobilgerät 1 entgegengenommenen Transaktionsinitiierungsbeleg zugeordnet ab.

Wie in der Figur 2 illustriert wird, erwartet die Transaktionszentrale 4 für eine betreffende Zahlungstransaktion vom Bezahlungsterminal 2 die durch den Pfeil S3 angedeutete Übertragung des Transaktionsaufgabebelegs innerhalb eines vordefinierten Zeitintervalls Δt₁ nachdem die Transaktionszentrale 4 vom Mobilgerät 1 die durch den Pfeil S2' angedeutete Übertragung des Transaktionsinitiierungsbelegs erhalten hat. Ansonsten wird in der Transaktionszentrale 4 ein Zeitfehler registriert und die Weiterbehandlung der Zahlungstransaktion, beispielsweise nach entsprechender Benachrichtung des Mobilgeräts 1, abgebrochen. Der Fachmann wird verstehen, dass, beispielsweise wegen unterschiedlichen Übertragungszeiten, der Eingang und entsprechend die Abspeicherung des Transaktionsinitiierungsbelegs und des Transaktionsaufgabebelegs in umgekehrter Reihenfolge erfolgen kann, so dass das Zeitintervall Δt₁ durch den Empfang des Transaktionsaufgabebelegs gestartet wird.

Die Transaktionszentrale 4 umfasst ein Bezahlungsaufforderungsmodul 42, beispielsweise ein programmiertes Softwaremodul, welches von Bezahlungsterminals 2 entgegengenommene Transaktionsaufgabebelege auf Grund der darin enthaltenen Bezahlungsterminalidentifizierung und Kundenidentifizierung mit Transaktionsinitiierungsbelegen vergleicht, die von Mobilgeräten 1 empfangen wurden. Bei einer Übereinstimmung bereitet das Bezahlungsaufforderungsmodul 42 eine Bezahlungsaufforderung vor, welche beispielsweise die übereinstimmende Bezahlungsterminalidentifizierung sowie denim betreffenden Transaktionsaufgabebeleg enthaltenen Transaktionstotalbetrag umfasst. Wie in der Figur 2 durch den Pfeil S4 angedeutet wird, wird die vorbereitete Bezahlungsaufforderung vom Bezahlungsaufforderungsmodul 42 der Transaktionszentrale 4, unter Zuhilfenahme des Kommunikationsmoduls 45, über das Mobilfunknetz 6 an das Mobilgerät 1 mit der ermittelten Rufnummer übermittelt. Andernfalls, wenn das Bezahlungsaufforderungsmodul 42 keine übereinstimmenden Bezahlungsterminalidentifizierungen und Kundenidentifizierungen bestimmen kann, wird von der Transaktionszentrale 4 eine entsprechende Fehlermeldung, beispielsweise mit der Aufforderung die Bezahlungsterminalidentifizierung erneut einzugeben, an das Mobilgerät 1 übermittelt. An dieser Stelle sollte erwähnt werden, dass die Bezahlungsaufforderung zur Erhöhung der Sicherheit, insbesondere zur Bestimmung derAuthentizität der Transaktionszentrale 4, durch das Bezahlungsaufforderungsmodul 42 mit einer elektronischen Signatur der Transaktionszentrale 4 versehen oder als gesichertes Zertifikat ausgeführt wird.

Im betreffenden Mobilgerät 1 wird die von der Transaktionszentrale 4 übermittelte Bezahlungsaufforderung über das Mobilfunknetz 6 entgegengenommen und in einer Variante auf Grund der darin enthaltenen Bezahlungsterminalidentifizierung gefiltert, indem die in der Bezahlungsaufforderung enthaltene Bezahlungsterminalidentifizierung vom Mobilgerät 1 mit der vorgängig an die Transaktionszentrale 4 übermittelten Bezahlungsterminalidentifizierung verglichen wird. In einem Bezahlungsbelegmodul 14 des Mobilgeräts 1, beispielsweise ein programmiertes Softwaremodul, wird auf Grund der empfangenen Bezahlungsaufforderung ein Bezahlungsbeleg vorbereitet, beispielsweise nachdem die Authentizität der Bezahlungsaufforderung, respektive die Authentizität der Transaktionszentrale 4 überprüft wurde und die Bezahlungsaufforderung dem Kunden auf der Anzeige 19 des Mobilgeräts 1 angezeigt wurde und der Kunde die Bezahlung mittels den Bedienungselementen 18 des Mobilgeräts 1 akzeptiert und damit freigegeben hat. Der vorbereitete Bezahlungsbeleg umfasst die entgegengenommene Bezahlungsaufforderung und eine Identifizierung des Kunden, beispielsweise die oben erwähnte Kundenidentifizierung oder eine IMSI (International Mobile Subscriber Identity), die jeweils auf der SIM-Karte 17 des Mobilgeräts 1 gespeichert sind. Zur Verbesserung der Sicherheit kann-der Bezahlungsbeleg durch das Bezahlungsbelegmodul 14 mit einer elektronischen Signatur des betreffenden Kunden versehen oder als gesichertes Zertifikat ausgeführt werden. Der Bezahlungsbeleg kann auch mit einer Zeit-/Datumsangabe versehen werden.

Vorteilhafterweise fügt das Bezahlungsbelegmodul 14 zudem Angaben über die gewünschte Zahlungsart in den Bezahlungsbeleg ein, welche Angaben beispielsweise als Default-Wert in der SIM-Karte 17 des Mobilgeräts 1 gespeichert sind oder vom betreffenden Kunden über die Anzeige 19 des Mobilgeräts 1 angefordert und über die Bedienungselemente 18 entgegengenommen werden. Die Angaben über die gewünschte Zahlungsart spezifizieren beispielsweise eine gewünschte Belastung des zu zahlenden Transaktionstotalbetrags auf eine bestimmte Kreditkartennummer, eine Belastung auf ein bestimmtes Kundenkonto, eine Belastung auf ein bestimmtes Bankkonto oder eine Belastung auf einen im Mobilgerät gespeicherten vorausbezahlten Geldbetrag, beispielsweise auf der SIM-Karte 17 des Mobilgeräts 1. Das Bezah lungsbelegmodul 14 des Mobilgeräts 1 übermittelt den vorbereiteten Bezahlungsbeleg, wie in der Figur 2 durch den Pfeil S5 angedeutet, über das Mobilfunknetz 6 an die Transaktionszentrale 4.

Wie in der Figur 2 illustriert wird, erwartet die Transaktionszentrale 4 für eine betreffende Zahlungstransaktion vom Mobilgerät 1 die durch den Pfeil S5 angedeutete Übertragung der Bezahlungsbelege innerhalb eines vordefinierten Zeitintervalls Δt₂ nachdem die Transaktionszentrale 4 die durch den Pfeil S4 angedeutete Übertragung der Bezahlungsaufforderung an das Mobilgerät 1 ausgeführt hat. Ansonsten wird in der Transaktionszentrale 4 ein Zeitfehler registriert und die durch den Pfeil S4 angedeutete Übertragung beispielsweise erneut ausgeführt und eventuell, beispielsweise bei wiederholtem Misserfolg, die Weiterbehandlung der Zahlungstransaktion, beispielsweise nach entsprechender Benachrichtung des Bezahlungsterminals 2, abgebrochen.

In der Transaktionszentrale 4 wird der Bezahlungsbeleg, beispielsweise vom Bezahlungsaufforderungsmodul 42, entgegengenommen und gegebenenfalls die Authentizität des Kunden auf Grund der elektronischen Signatur, respektive des Zertifikats, überprüft. In einer Ausführungsvariante überprüft die Transaktionszentrale 4, zum Beispiel mittels des Solvenzüberprüfungsmoduls 43, das beispielsweise als programmiertes Softwaremodul ausgeführt ist, auf Grund der im Bezahlungsbeleg übermittelten Identifizierung des Kunden die Solvenz des betreffenden Kunden. Dabei greift das Solvenzüberprüfungsmodul 43 beispielsweise direkt oder über geeignete Dienste auf eine entsprechende Datenbank zu, deren Inhalt beispielsweise durch einen Kommunikationsnetzbetreiber, beispielsweise der Betreiber des Mobilfunknetzes 6, oder durch ein Finanzinstitut verwaltet wird. Bei einem negativen Resultat der Solvenzprüfung, respektive der Authentizitätsprüfung, kann die Transaktionszentrale 4, beispielsweise durch das Transaktionsbestätigungsmodul 44, das beispielsweise als programmiertes Softwaremodul ausgeführt ist, gegebenenfalls eine negative Transaktionsbestätigung an das betreffende Mobilgerät 1 sowie an das an der betreffenden Zahlungstransaktion beteiligte Bezahlungsterminal 2 übermitteln, mittels welcher negativen Transaktionsbestätigung dem betreffenden Kunden die Bezahlung der Zahlungstransaktion über das erfindungsgemässe Verfahren wegen mangelnder Solvenz verwehrt wird. Bei einem positiven Resultat der Solvenzprüfung und/oder der Authentizitätsprüfung übermittelt das Transaktionsbestätigungsmodul 44 der Transaktionszentrale 4, eine positive Transaktionsbestätigung an das an der betreffenden Zahlungstransaktion beteiligte Bezahlungsterminal 2 und an das betreffende Mobilgerät 1. Die Transaktionsbestätigungen enthalten mindestens Angaben zur Identifizierung der betreffenden Zahlungstransaktion sowie eine Angabe darüber, ob es sich um eine positive oder negative Transaktionsbestätigung handelt, wobei im letzteren Fall die jeweiligen Gründe, beispielsweise ein oben erwähnter Zeitfehler, mangelnde Solvenz oder nicht bestätigte Authentizität des betreffenden Kunden, angegeben werden. Bei einer positiven Transaktionsbestätigung gilt die Zahlungstransaktion für das Bezahlungsterminal 2 und für das Mobilgerät 1, respektive den betreffenden Kunden als erfolgt und die erstandenen Produkte und/oder Dienstleistungen können dem Kunden in der Dienststelle 5 freigegeben werden. Der Fachmann wird verstehen, dass die positive Transaktionsbestätigung beispielsweise erst dann von der Transaktionszentrale 4 an die an der betreffenden Zahlungstransaktion beteiligten Transaktionspartner übermittelt wird, wenn die untenstehend beschriebene Weiterverarbeitung des Bezahlungsbelegs durch die Transaktionszentrale 4 abgeschlossen ist. Die Übermittlung der Transaktionsbestätigung durch die Transaktionszentrale 4 an das Bezahlungsterminal 2 wird in der Figur 2 durch den Pfeil S6 und die Übermittlung der Transaktionsbestätigung durch die Transaktionszentrale 4 an das Mobilgerät 1 wird in der Figur 2 durch den Pfeil S7 angedeutet. Insbesondere positive Transaktionsbestätigungen können von der Transaktionszentrale 4 auch mittels E-Mail, per Fax oder per Briefpost an eine vordefinierte E-Mail-Adresse, Fax-Nummer, respektive Postadresse des betreffenden Kunden und/oder (des Betreibers) der Dienststelle 5 übermittelt werden.

Vorteilhafterweise werden die Bezahlungsbelege und/oder die positiven Transaktionsbestätigungen, beispielsweise durch das Bezahlungsbelegmodul 14, in einem Speicher 15 des Mobilgeräts 1 gespeichert, beispielsweise auf einer SIM-Karte 17 des Mobilgeräts 1, so dass sie später als Quittung verwendet werden können und/oder dass sie dem betreffenden Kunden zur Verwaltung der von ihm getätigten Zahlungstransaktionen zur Verfügung stehen. Falls Transaktionsbestätigungen durch die Dientstelle 5, respektive deren Betreiber, und den Kunden, beispielsweise im Mobilgerät 1, zu Buchführungszwecken, respektive zu Quittierungszwecken, verwendet werden, enthalten sie zusätzlich mindestens den Transaktionstotalbetrag der betreffenden Zahlungstransaktion, vorteilhafterweise aber zusätzlich auch weitere oben erwähnte Angaben, die im Bezahlungsbeleg der betreffenden Zahlungstransaktion enthalten sind, insbesondere Signaturen, respektive Zertifikate, der beteiligten Transaktionspartner.

Das Transaktionsaufgabemodul 23 der Bezahlungsterminals 2 umfasst beispielsweise programmierte Mittel, welche für eine Zahlungstransaktion eine Transaktionsidentifizierung bestimmen und diese Transaktionsidentifizierung in den Transaktionsaufgabebeieg einfügen. Diese Transaktionsidentifizierung enthält beispielsweise die Bezahlungsterminalidentifizierung, die Dienststellenidentifizierung, sowie eine Transaktionsnummer, die beispielsweise für jede neue Zahlungstransaktion fortlaufend inkrementiert wird und/oder eine Datums-/Zeitangabe umfasst. Der Fachmann wird verstehen, dass die Transaktionsidentifizierung auch durch eine unstrukturierte eindeutige Transaktionsnummer ersetzt werden kann, allerdings würde dadurch eine zentralisierte Verwaltung der Transaktionsidentifizierungen erforderlich. Die Anzahl Zahlenziffern und/oder Buchstaben der Dienststellenidentifizierung hängt davon ab, wieviele Dienststellen 5 ihre Zahlungstransaktionen über die Transaktionszentrale 4 abwickeln. Die Dienststellenidentifizierung kann beispielsweise so strukturiert sein, dass sie eine Zuweisungsautoritätsidentifizierung umfasst, die die Zuweisungsautorität bestimmt, die die Dienststellenidentifizierung der betreffenden Dienststelle 5 zugewiesen hat, beispielsweise den Betreiber einer Kette von Dienststellen 5, und dass sie eine für diese Zuweisungsautorität eindeutige Dienststellennummer umfasst. Die Dienststellenidentifizierung kann auch für eine internationale Verwendung vorgesehen sein und beispielsweise Länderidentifizierungen und/oder andere geeignete Datenelemente umfassen. Die Anzahl Zahlenziffern und/oder Buchstaben der Transaktionsnummer hängt davon ab, wieviele Zahlungstransaktionen in einem vordefinierten Zeitintervall, beispielsweise an einem Tag oder an einem Halbtag, über ein Bezahlungsterminal 2 abgewickelt werden.

Bei gegebenenfalls positivem Resultat der Solvenzprüfung und/oder der Authentizitätsprüfung wird der Bezahlungsbeleg in der Transaktionszentrale 4, gegebenenfalls unter Berücksichtigung der darin enthaltenen Angaben über die vom Kunden gewünschte Zahlungsart, weiterverarbeitet. Mittels des Kommunikationsmoduls 45 können die Bezahlungsbelege beispielsweise über das Kommunikationsnetz 3 an ein Finanzinstitut oder an eine Clearingstelle weitergeleitet werden, oder der Transaktionstotalbetrag kann durch die Transaktionszentrale 4 über das Mobilnetz 6 direkt von einem im Mobilgerät 1, beispielsweise in der SIM-Karte 17 des Mobilgeräts 1, gespeicherten vorausbezahlten Geldbetrag abgezogen werden. Auf Grund der im Transaktionsaufgabebeleg enthaltenen Dienststellenidentifizierung kann der Transaktionstotalbetrag von der Transaktionszentrale 4, beispielsweise durch das Gutschriftmodul 41 der Transaktionszentrale 4, welches beispielsweise als Softwaremodul ausgeführt ist, der Dienststelle 5 gutgeschrieben werden, wobei diese Gutschrift beispielsweise auf einem entsprechenden Konto in der Transaktionszentrale 4 oder über das Kommunikationsnetz 3 erreichbar in einer Datenbank eines Finanzinstituts gutgeschrieben wird. Die Gutschrift kann aber auch auf dem oben beschriebenen Weg über das Finanzinstitut oder die Clearingstelle abgewickelt werden.

Wie bereits im Zusammenhang mit der Menü- und Funktionsablaufsteuerung für das Anwählen der Funktion "Zahlungstransaktion" erwähnt wurde, können die Softwaremodule, insbesondere das Transaktionsinitiierungsmodul 13 und das Bezahlungsbelegmodul 14 sowie Softwarekomponenten des Authentifizierungsmoduls 12, beispielsweise auf der SIM-Karte 17 des Mobilgeräts gespeichert werden, zum Beispiel als Java-Applet oder als SIM-Toolkit Funktionen, und beispielsweise auch auf einem Prozessor der SIM-Karte 17 ausgeführt werden. Die Softwaremodule können zudem so realisiert werden, dass sie von einem berechtigten Betreiber über die kontaktlose Geräteschnittstelle 11 oder über das Mobilfunknetz 6 gesperrt werden können, beispielsweise wenn der Eigentümer des Mobilgeräts 1 den Verlust des betreffenden Mobilgeräts 1 einem zuständigen Betreiber gemeldet hat.

Als abschliessender Punkt soll zudem angeführt werden, dass die Datenübertragungen über die kontaktlose Schnittstelle 11-21 zur Erhöhung der Sicherheit gemäss einem dem Fachmann bekannten Verfahren verschlüsselt werden können.

Das erfindungsgemässe Zahlungstransaktionsverfahren und das erfindungsgemässe Zahlungstransaktionssystem ermöglichen Kunden, die mit einem Mobilgerät 1 ausgerüstet sind, in einer Dienststelle 5, welche mit einem oder mehreren Bezahlungsterminals 2 ausgestattet sind, Zahlungstransaktionen bargeldlos mit ihren Mobilgeräten 1 auszuführen. Dabei muss ein Kunde, nachdem er sich beispielsweise bei seinem Mobilgerät 1 authentifiziert hat, je nach Ausführungsvariante, bloss die Bezahlungsterminalidentifizierung des betreffenden Bezahlungsterminals oder gar keine weiteren Daten in das Mobilgerät 1 eintippen. Solche Zahlungstransaktionen von einer oder mehreren Dienststellen 5 können in einer Transaktionszentrale 4 abgewickelt werden, wobei die Transaktionszentrale 4 die Authentizität beteiligter Zahlungstransaktionspartner und die Solvenz von Kunden überprüfen, sowie Belastungen, gemäss Angaben der Kunden, und Gutschriften für Zahlungstransaktionen ausführen kann.

## Patentansprüche

1. Zahlungstransaktionsverfahren zwischen einem Kunden mit einem tragbaren Mobilgerät (1) und einer Dienststelle (5), in welchem Zahlungstransaktionsverfahren einem Bezahlungsterminal (2) jeweils eine Bezahlungsterminalidentifizierung zugeordnet ist, welche Bezahlungsterminalidentifizierung ermöglicht, das betreffende Bezahlungsterminal (2) aus mehreren in der Dienststelle (5) vorhandenen Bezahlungsterminals (2) zu identifizieren, und in welchem Zahlungstransaktionsverfahren ein Bezahlungsterminal (2) der Dienststelle (5) einen zu bezahlenden Transaktionstotalbetrag bestimmt und den Kunden über den Transaktionstotalbetrag sowie über die Bezahlungsterminalidentifizierung informiert, **dadurch gekennzeichnet,**
**dass** der Kunde die Bezahlungsterminalidentifizierung dem Mobilgerät (1) angibt und im Mobilgerät (1) ein Transaktionsinitiierungsbeleg, der eine Verknüpfung der angegebenen Bezahlungsterminalidentifizierung mit einer Kundenidentifizierung des Kunden umfasst, vorbereitet wird,
**dass** der Transaktionsinitiierungsbeleg vom Mobilgerät (1) über eine kontaktlose Geräteschnittstelle (11) direkt an das Bezahlungsterminal (2) übermittelt wird,
**dass** der Transaktionsinitiierungsbeleg vom Mobilgerät (1) über ein Mobilfunknetz (6) an eine Transaktionszentrale (4) übermittelt wird,
**dass** das Bezahlungsterminal (2) nach dem Empfang des Transaktionsinitiierungsbelegs einen Transaktionsaufgabebeleg, der mindestens die Kundenidentifizierung, die Bezahlungsterminalidentifizierung und den Transaktionstotalbetrag umfasst, vorbereitet und über ein Kommunikationsnetz (3) an die Transaktionszentrale (4) übermittelt, und
**dass** die Transaktionszentrale (4) eine Bezahlungsaufforderung, die mindestens den Transaktionstotalbetrag umfasst, über das Mobilfünknetz (6) an das Mobilgerät (1) übermittelt, von welchem Mobilgerät (1) der Transaktionsinitiierungsbeleg an die Transaktionszentrale (4) übermittelt wurde.

2. Zahlungstransaktionsverfahren gemäss Anspruch 1, **dadurch gekennzeichnet, dass** im Mobilgerät (1) ein Bezahlungsbeleg, der eine Verknüpfung der Bezahlungsaufforderung mit einer Kundenidentifizierung des Kunden umfasst, vorbereitet und vom Mobilgerät (1) über das Mobilfunknetz (6) an die Transaktionszentrale (4) übermittelt wird.

3. Zahlungstransaktionsverfahren gemäss Anspruch 2, **dadurch gekennzeichnet, dass** im Mobilgerät (1) vor der Übermittlung des Bezahlungsbelegs an die Transaktionszentrale (4) Angaben über die Bezahlungsart in den Bezahlungsbeleg eingefügt werden.

4. Zahlungstransaktionsverfahren gemäss einem der Ansprüche 1 bis 3, **dadurch gekennzeichnet, dass** das Bezahlungsterminal (2) bei der Vorbereitung des Transaktionsaufgabebelegs zusätzlich eine Dienststellenidentifizierung in den Transaktionsaufgabebeleg einfügt, und dass der Transaktionstotalbetrag der durch die Dienststellenidentifizierung bestimmten Dienststelle (5) gutgeschrieben wird.

5. Zahlungstransaktionsverfahren gemäss einem der Ansprüche 1 bis 4, **dadurch gekennzeichnet, dass** sich der Kunde vor der Angabe der Bezahlungsterminalidentifizierung bei seinem Mobilgerät (1) mit einem biometrischen Merkmal authentifiziert.

6. Zahlungstransaktionsverfahren gemäss einem der Ansprüche 1 bis 5, **dadurch gekennzeichnet, dass** das Bezahlungsterminal (2) die Bezahlungsterminalidentifizierung über die kontaktlose Geräteschnittstelle (11-21) direkt an das Mobilgerät (1) übermittelt, und dass der Kunde die Bezahlungsterminalidentifizierung dem Mobilgerät (1) angibt, indem er die vom Bezahlungsterminal (2) über die kontaktlose Geräteschnittstelle (11-21) empfangene Bezahlungsterminalidentifizierung mittels Bedienungselementen (18) des Mobilgeräts (1) akzeptiert.

7. Zahlungstransaktionsverfahren gemäss einem der Ansprüche 1 bis 6, **dadurch gekennzeichnet, dass** die Solvenz des Kunden in der Transaktionszentrale (4) überprüft wird.

8. Zahlungstransaktionssystem umfassend eines oder mehrere tragbare Mobilgeräte (1) und ein oder mehrere Bezahlungsterminals (2) in mindestens einer Dienststelle (5), sowie eine Transaktionszentrale (4), welche Mobilgeräte (1) und Bezahlungsterminals (2) jeweils mindestens einen Prozessor (16, 26) und eine kontaktlose Geräteschnittstelle (11, 21) umfassen, über welche kontaktlose Geräteschnittstelle (11) die Mobilgeräte (1) Daten direkt an die Bezahlungsterminals (2) übermitteln können, welchen Bezahlungsterminals (2) jeweils eine Bezahlungsterminalidentifizierung zugeordnet ist, welche Bezahlungsterminalidentifizierung ermöglicht, das betreffende Bezahlungsterminal (2) aus mehreren in der Dienststelle (5) vorhandenen Bezahlungsterminals (2) zu identifizieren, welche Bezahlungsterminals (2) jeweils Mittel umfassen, um einen Kunden über die Bezahlungsterminalidentifizierung zu informieren, welche Bezahlungsterminals (2) jeweils Mittel (29) umfassen, um einen Kunden über einen zu bezahlenden Transaktionstotalbetrag einer Zahlungstransaktion zu informieren, **dadurch gekennzeichnet,**
**dass** die Mobilgeräte (1) jeweils ein Transaktionsinitiierungsmodul (13) umfassen, welches Transaktionsinttiierungsmodul (13) eine von einem Kunden angegebene Bezahlungsterminalidentifizierung entgegennimmt, einen Transaktionsinitiierungsbeleg, der eine Verknüpfung der angegebenen Bezahlungsterminalideniifizierung mit einer Kundenidentifizierung des Kunden umfasst, vorbereitet und über die kontaktlose Geräteschnittstelle (11-21) direkt an das betreffende Bezahlungsterminal (2) und über ein Mobilfunknetz (6) an eine Transaktionszentrale (4) übermittelt,
**dass** die Bezahlungsterminals (2) jeweils ein Transaktionsaufgabemodul (23) umfassen, welches Transaktionsaufgabemodul (23) jeweils nach dem Empfang des Transaktionsinitiierungsbelegs einen Transaktionsaufgabebeleg, der mindestens die Kundenidentifizierung, die Bezahlungsterminalidentifizierung und den Transaktionstotalbetrag der betreffenden Zahlungstransaktion umfasst, vorbereitet und über ein Kommunikationsnetz (3) an die Transaktionszentrale (4) übermittelt, und
**dass** die Transaktionszentrale (4) ein Bezahlungsaufforderungsmodul (42) umfasst, welches Bezahlungsaufforderungsmodul (42) eine Bezahlungsaufforderung, die mindestens den Transaktionstotalbetrag der betreffenden Zahlungstransaktion umfasst, über das Mobilfunknetz (6) an das Mobilgerät (1) übermittelt, von welchem Mobilgerät (1) der Transaktionsinitiierungsbeleg der betreffenden Zahlungstransaktion übermittelt wurde.

9. System gemäss Anspruch 8, **dadurch gekennzeichnet, dass** die Mobilgeräte (1) jeweils ein Bezahlungsbelegmodul (14) umfassen, welches Bezahlungsbelegmodul (14) einen Bezahlungsbeleg, der eine durch das betreffende Mobilgerät (1) von der Transaktionszentrale (4) entgegengenommene Bezahlungsaufforderung und eine Kundenidentifizierung des betreffenden Kunden umfasst, vorbereitet und über das Mobilfunknetz (6) an die Transaktionszentrale (4) übermittelt.

10. System gemäss Anspruch 9, **dadurch gekennzeichnet, dass** das Bezahlungsbelegmodul (14) Mittel umfasst, um vor der Übermittlung des Bezahlungsbelegs an die Transaktionszentrale (4) Angaben über die Bezahlungsart in den Bezahlungsbeleg einzufügen.

11. System gemäss einem der Ansprüche 8 bis 10, **dadurch gekennzeichnet, dass** das Transaktionsaufgabemodul (23) Mittel umfasst, um bei der Vorbereitung des Transaktionsaufgabebelegs zusätzlich eine Dienststellenidentifizierung in den Transaktionsaufgabebeleg einzufügen, und dass die Transaktionszentrale (4) ein Gutschriftmodul (41) umfasst, welches Gutschriftmodul den Transaktionstotalbetrag der betreffenden Zahlungstransaktion der durch die Dienststellenidentifizierung bestimmten Dienststelle (5) gutschreibt.

12. System gemäss einem der Ansprüche 8 bis 11, **dadurch gekennzeichnet, dass** die Mobilgeräte (1) jeweils ein Authentifizierungsmodul (12) umfassen, um von einem Kunden mindestens ein biometrisches Merkmal entgegenzunehmen und um den Kunden auf Grund des entgegengenommenen biometrischen Merkmals zu authentifizieren.

13. System gemäss einem der Ansprüche 8 bis 12, **dadurch gekennzeichnet, dass** die Bezahlungsterminals (2) jeweils ein Bezahlungsterminalidentifizierungsmodul umfassen, um die Bezahlungsterminalidentifizierung über die kontaktlose Geräteschnittstelle (11-12) direkt an das Mobilgerät (1) zu übertragen, und dass das Transaktionsinitiierungsmodul (13) Mittel umfasst, um einen vom betreffenden Kunden mittels Bedienungselementen (18) des Mobilgeräts (1) eingegebenen Akzeptierungsbefehl entgegenzunehmen, und dem Akzeptierungsbefehl entsprechend die Bezahlungsterminalidentifizierung des betreffenden Bezahlungsterminals entgegenzunehmen.

14. System gemäss einem der Ansprüche 8 bis 13, **dadurch gekennzeichnet, dass** die Transaktionszentrale (4) ein Solvenzüberprüfungsmodul (43) umfasst, welches Solvenzüberprüfungsmodul (43) die Solvenz eines Kunden überprüft.

## Revendications

1. Procédé de transaction de paiement entre un client muni d'un appareil mobile portable (1) et un centre de services (5), procédé de transaction de paiement dans lequel un terminal de paiement (2) est associé respectivement à une identification de terminal de paiement, identification de terminal de paiement qui permet d'identifier le terminal de paiement concerné (2) parmi plusieurs terminaux de paiement (2) existant dans le centre de service (5) et procédé de transaction de paiement dans lequel un terminal de paiement (2) du centre de services (5) détermine un montant transactionnel total à payer et informe le client sur le montant transactionnel total ainsi que sur l'identification de terminal de paiement, **caractérisé**
**en ce que** le client indique l'identification de terminal de paiement à l'appareil mobile (1) et en ce que dans l'appareil mobile (1) un récépissé d'identification de transaction est préparé, lequel comprend un lien de l'identification de terminal de paiement indiquée avec une identification de client,
**en ce que** le récépissé d'initiation de transaction provenant de l'appareil mobile (1) est transmis directement au terminal de paiement (2) par l'intermédiaire d'une interface de périphérique sans contact (11),
**en ce que** le récépissé d'initiation de transaction provenant de l'appareil mobile(1) est transmis directement à une centrale de paiement (4) par l'intermédiaire d'un réseau radio mobile (6),
**en ce que** le terminal de paiement (2) prépare après la réception du justificatif d'initiation de transaction un justificatif d'ordre de transaction qui comprend au moins l'identification de client, l'identification de terminal de paiement et le montant transactionnel total et le transmet à la centrale de paiement (4) par l'intermédiaire d'un réseau de communication (3), et
**en ce que** la centrale de transaction (4) transmet une invite de paiement qui comprend au moins le montant transactionnel total par l'intermédiaire du réseau radio mobile (6) au périphérique mobile (1), périphérique mobile (1) depuis lequel le justificatif d'initiation de transaction a été transmis à la centrale de paiement (4).

2. Procédé de transaction de paiement conforme à la revendication 1, **caractérisé en ce que** dans l'appareil mobile (1), un justificatif de paiement qui comprend un lien entre l'invite de paiement et l'indentification de paiement du client est préparé et transmis depuis le périphérique mobile (1) via le réseau radio mobile (6) à la centrale de transaction (4).

3. Procédé de transaction de paiement selon la revendication 2, **caractérisé en ce que** dans le périphérique mobile (1) avant le transfert du justificatif de paiement à la centrale de paiement (4), des données sur le mode de paiement sont ajoutées dans le justificatif de paiement.

4. Procédé de transaction de paiement selon l'une des revendications 1 à 3, **caractérisé en ce que** le terminal de paiement (2) insère lors de la préparation du justificatif d'ordre de transaction en supplément une identification de centre de services au justificatif d'ordre de paiement et **en ce que** le montant total de transaction est crédité au centre de services (5) défini par l'identification de centre de service.

5. Procédé de transaction de paiement selon l'une des revendications 1 à 4, **caractérisé en ce que** le client s'authentifie avant l'indication d'identification de terminal de paiement auprès de son périphérique mobile (1) par une caractéristique biométrique.

6. Procédé de transaction de paiement selon l'une des revendications 1 à 5, **caractérisé en ce que** le terminal de paiement (2) transmet l'identification de terminal de paiement par l'intermédiaire de l'interface de périphérique sans contact (11-21) directement au périphérique mobile (1) et **en ce que** le client indique l'identification de terminal de paiement au périphérique mobile dans le fait qu'il accepte l'identification de terminal de paiement reçue par le terminal de paiement (2) par l'intermédiaire de l'interface de périphérique sans contact (11-21) au moyen des éléments de commande (18) du périphérique mobile (1).

7. Procédé de transaction de paiement selon l'une des revendications 1 à 6, **caractérisé en ce que** la solvabilité du client est vérifiée dans la centrale de transaction (4).

8. Système de transaction de paiement comprenant un ou plusieurs périphériques mobiles portables (1) et un ou plusieurs terminaux de paiement (2) dans au moins un centre de services (5) ainsi qu'une centrale de transaction (4), périphériques mobiles (1) et terminaux de paiement (2) qui comprennent au moins un processeur (16, 26) et une interface de périphérique sans contact (11, 21), interface de périphérique sans contact (11) par l'intermédiaire de laquelle les périphériques mobiles (1) peuvent transmettre des données directement aux terminaux de paiement (2), terminaux de paiement (2) qui sont associés respectivement à une identification de terminal de paiement, identification de terminal de paiement qui permet d'identifier le terminal de paiement correspondant (2) à partir de plusieurs terminaux de paiement (2) existant dans le centre de services (5), terminaux de paiement (2) qui comprennent respectivement des moyens pour informer un client sur l'identification de terminal de paiement, terminaux de paiement (2) qui comprennent respectivement des moyens (29) pour informer un client sur le montant transactionnel total à payer d'une transaction de paiement, **caractérisé en ce que**
les périphériques mobiles (1) comprennent respectivement un module d'initiation de transaction (13), module d'initiation de transaction (13) qui reçoit une identification de terminaux de paiement indiquée par le client, qui prépare un justificatif d'initiation de transaction, qui comporte un lien entre l'identification de terminal de paiement indiquée et l'indentification du client, et le transmet par l'intermédiaire de l'interface de périphérique sans contact (11-21) directement au terminal de paiement concerné (2) et par un réseau radio mobile (6) à une centrale de transaction (4),
**en ce que** les terminaux de paiement (2) comprennent respectivement un module d'ordre de transaction (23), module d'ordre de transaction (23) qui prépare respectivement après la réception du justificatif d'initiation de la transaction un justificatif d'ordre de transaction qui comprend au moins l'identification de client, l'identification de terminal de paiement et le montant transactionnel total de la transaction de paiement concernée et le transmet par un réseau de communication (3) à la centrale de transaction (4) et
**en ce que** la centrale de transaction (4) comprend un module d'invite de paiement (42), module d'invite de paiement (42) qui transmet par l'intermédiaire du réseau radio mobile (6) une invite de paiement qui comprend au moins le montant transactionnel total de la transaction considérée, au périphérique mobile (1), périphérique mobile (1) depuis lequel a été transmis le justificatif d'initiation de la transaction de paiement concernée.

9. Système selon la revendication 8, **caractérisé en ce que** les périphériques mobiles (1) comprennent respectivement un module de justificatif de paiement (14), module de justificatif de paiement (14) qui prépare un justificatif de paiement qui comprend une invite de paiement réceptionné par le périphérique mobile concerné (1) par la centrale de transaction (4) et une identification du client concerné et qui le transmet par le réseau radio mobile (6) à la centrale de transaction (4).

10. Système selon la revendication 9, **caractérisé en ce que** le module de justificatif de paiement (14) comprend des moyens pour insérer dans le justificatif de paiement avant la transmission du justificatif de paiement à la centrale de transaction (4) des données sur la nature du paiement.

11. Système selon l'une des revendications 8 à 10, **caractérisé en ce que** le module d'invite de transaction (23) comprend des moyens pour introduire lors de la préparation du justificatif d'invite de transaction en supplément une identification de centre de services dans le justificatif d'invite de transaction et **en ce que** la centrale de transaction (4) comprend un module de crédit (41), module de crédit qui crédite le montant transactionnel total de la transaction concernée de paiement au centre de services (5) défini par l'identification de centre de service.

12. Système selon l'une des revendications 8 à 11, **caractérisé en ce que** les périphériques mobiles (1) comprennent respectivement un module d'authentification (12) pour réceptionner d'un client au moins une caractéristique biométrique et pour authentifier le client sur la base de la caractéristique biométrique réceptionnée.

13. Système selon l'une des revendications 8 à 12, **caractérisé en ce que** les terminaux de paiement (2) comprennent respectivement un module d'identification de terminal de paiement pour transmettre l'identification de terminal de paiement par l'interface de périphérique sans contact (11-12) directement au périphérique mobile (1) et **en ce que** le module d'initiation de transaction (13) comprend des moyens pour réceptionner une instruction d'acceptation entrée par le client concerné au moyen des éléments de commande (18) du périphérique mobile (1) et en fonction de l'instruction d'acceptation de réceptionner l'identification du terminal de paiement considéré.

14. Système selon l'une des revendications 8 à 13, **caractérisé en ce que** la centrale de transaction (4) comprend un module de contrôle de solvabilité (43), module de contrôle de solvabilité (43) qui contrôle la solvabilité d'un client.

## Claims

1. Payment transaction method between a customer with a portable mobile device (1) and a service point (5) in which payment transaction method a payment terminal is assigned in each case a payment terminal identification, which payment terminal identification makes it possible to identify the respective payment terminal (2) from among a plurality of payment terminals (2) present at the service point (5), and in which payment transaction method a payment terminal (2) of the service point (5) determines a total transaction amount to be paid and informs the customer about the total transaction amount as well as about the payment terminal identification, **characterised in that**
the customer indicates the payment terminal identification to the mobile device (1) and a transaction initiation record is prepared in the mobile device (1) comprising a linking of the indicated payment terminal identification to a customer identification for the customer,
the transaction initiation record is transmitted from the mobile device (1) via a contactless device interface (11) directly to the payment terminal (2),
the transaction initiation record is transmitted by the mobile device (1) via a mobile radio network (6) to a central transaction unit (4),
the payment terminal (2), after receipt of the transaction initiation record, prepares a transaction placing record, comprising at least the customer identification, the payment terminal identification and the total transaction amount, and transmits it via a communication network (3) to the central transaction unit (4), and
the central transaction unit (4) transmits a payment request, comprising at least the total transaction amount, via the mobile radio network (6) to the mobile device (1) from which mobile device (1) the transaction initiation record was transmitted to the central transaction unit (4).

2. Payment transaction method according to claim 1, **characterised in that** a payment record comprising a linking of the payment request to a customer identification for the customer is prepared in the mobile device (1) and is transmitted from the mobile device (1) via the mobile radio network (6) to the central transaction unit (4).

3. Payment transaction method according to claim 2, **characterised in that**, in the mobile device (1), indications about the mode of payment are inserted in the payment record before transmission of the payment record to the central transaction unit (4).

4. Payment transaction method according to one of the claims 1 to 3, **characterised in that** during preparation of the transaction placing record the payment terminal (2) additionally inserts a service point identification into the transaction placing record, and the total transaction amount is credited to the service point (5) identified through the service point identification.

5. Payment transaction method according to one of the claims 1 to 4, **characterised in that** before indicating the payment terminal identification the customer authenticates himself at his mobile device (1) with a biometric feature.

6. Payment transaction method according to one of the claims 1 to 5, **characterised in that** the payment terminal (2) transmits the payment terminal identification directly to the mobile device (1) via the contactless device interface (11-21), and the customer indicates the payment terminal identification to the mobile device (1) **in that** he accepts by means of operating elements (18) of the mobile device (1) the payment terminal identification received from the payment terminal (2) via the contactless interface (11-21).

7. Payment transaction method according to one of the claims 1 to 6, **characterised in that** the solvency of the customer is checked in the central transaction unit (4).

8. Payment transaction system comprising one or more portable mobile devices (1) and one or more payment terminals (2) in at least one service point (5), as well as a central transaction unit (4), which mobile devices (1) and payment terminals (2) each comprise at least one processor (16, 26) and a contactless device interface (11, 21) via which contactless device interface (11) the mobile devices are able to transmit data directly to the payment terminal (2), which payment terminals (2) are each assigned a payment terminal identification, which payment terminal identification makes it possible to identify the respective payment terminal (2) from among a plurality of payment terminals (2) present at the service point (5), which payment terminals (2) each comprise means of informing a customer about the payment terminal identification, which payment terminals (2) each comprise means of informing a customer about the total transaction amount to be paid for a payment transaction, **characterised in that**
the mobile devices (1) each comprise a transaction initiation module (13), which transaction initiation module (13) receives a payment terminal identification indicated by a customer, prepares a transaction initiation record comprising a linking of the indicated payment terminal identification to a customer identification for the customer, and transmits it via the contactless device interface (11-21) directly to the respective payment terminal (2) and via a mobile radio network to a central transaction unit (4),
the payment terminals (2) each comprise a transaction placing module (23), which transaction placing module (23) prepares, in each case after receipt of the transaction initiation record, a transaction placing record comprising at least the customer identification, the payment terminal identification and the total transaction amount for the respective payment transaction, and transmits it via a communication network (3) to the central transaction unit (4), and
the central transaction unit (4) comprises a payment request module (42), which payment request module (42) transmits a payment request comprising at least the total transaction amount for the respective payment transaction via the mobile radio network (6) to the mobile device (1) from which mobile device (1) the transaction initiation record was transmitted for the respective payment transaction.

9. System according to claim 8, **characterised in that** the mobile devices (1) each comprise a payment record module (14) which payment record module (14) prepares a payment record comprising a payment request received by the mobile device (1) from the central transaction unit (4) and a customer identification for the respective customer, and transmits it via the mobile radio network (6) to the central transaction unit (4).

10. System according to claim 9, **characterised in that** the payment record module (14) comprises means of inserting into the payment record indications about the mode of payment before transmitting the payment record to the central transaction unit (4).

11. System according to one of the claims 8 to 10, **characterised in that** the transaction placing module (23) comprises means of additionally inserting a service point identification into the transaction placing record during preparation of the transaction placing record, and the central transaction unit (4) comprises a crediting module (41) which crediting module (41) credits the total transaction amount for the respective payment transaction to the service point (5) identified through the service point identification.

12. System according to one of the claims 8 to 11, **characterised in that** the mobile devices (1) each comprise an authentication module (12) in order to receive at least one biometric feature from a customer and to authenticate the customer on the basis of the received biometric feature.

13. System according to one of the claims 8 to 12, **characterised in that** the payment terminals (2) each comprise a payment terminal identification module to transmit the payment terminal identification via the contactless device interface (11-21) directly to the mobile device (1), and the transaction initiation module (13) comprises means of receiving an acceptance command entered by the respective customer by means of operating elements (18) of the mobile device (1), and of receiving the payment terminal identification for the respective payment terminal corresponding to the acceptance command.

14. System according to one of the claims 8 to 13, **characterised in that** the central transaction unit (4) comprises a solvency checking module (43) which solvency checking module (43) checks the solvency of a customer.
